# EUROPEAN PATENT SPECIFICATION

(11) **EP 4 729 986 B1**
(45) Date of publication and mention of the grant of the patent: **14.10.2026**
(21) Application number: 24207883.0
(22) Date of filing: 21.10.2024
(51) Int. Cl.: G01S 13/58, E03D 5/10, G01S 13/72, G01S 13/88, A47K 13/10, A47K 13/30, E03D 9/08

(54) **APPARATUS AND METHOD FOR CONTROLLING ONE OR MORE FUNCTION OF A TOILET**
VORRICHTUNG UND VERFAHREN ZUR STEUERUNG EINER ODER MEHRERER FUNKTIONEN EINER TOILETTE
APPAREIL ET PROCÉDÉ DE COMMANDE D'UNE OU DE PLUSIEURS FONCTIONS DE TOILETTES

(43) Date of publication of application: 22.04.2026
(73) Proprietor: Infineon Technologies AG, 85579 Neubiberg (DE)
(72) Inventor: LEUNG, Tsz Shing, 999077 Hong Kong (HK); CHAN, Chun Hei, 999077 Hong Kong (HK); YUEN, Tsz Chung, 999077 Hong Kong (HK)
(74) Representative: Infineon Patent Department

(56) References cited:
- CN-A- 112 796 394
- JP-A- 2017 066 672
- US-A1- 2017 231 442

## Description

### Field

The present disclosure relates to toilet control. In particular, examples of the present disclosure relate to an apparatus and a method for controlling one or more functions of a toilet, and to a toilet.

### Background

Smart toilets are designed to automatically interact with users. For example, a smart toilet will open the lid when it detects a user approaching. However, conventional systems open the lid regardless of whether the user intends to use the toilet or is simply passing by. This unintended lid opening, known as false triggering, negatively impacts the user experience and wastes energy and resources over the toilet's lifespan.

Document US 2017/231442 A1 relates to a toilet seat device and a toilet device, such as a Doppler sensor using radio waves, equipped therewith.

Document JP 2017 066672 A relates to a sanitary device, and more particularly, to a sanitary device that automatically detects a user with a radio wave sensor and automatically operates.

Document CN 112 796 394 relates to the technical field of intelligent toilets, and specifically relates to a microwave sensor and an intelligent toilet.

Hence, there may be a demand for improved toilet control.

### Summary

This demand is met by the subject-matter of the independent claims. Advantageous embodiments are addressed by the dependent claims. The invention is defined by the independent claims.

According to a first aspect, the present disclosure provides an apparatus for controlling one or more functions of a toilet, according to claim 1.

According to a second aspect, the present disclosure provides a toilet comprising a radar sensor, and an apparatus according to the first aspect for controlling one or more functions of the toilet, according to claim 10.

According to a third aspect, the present disclosure provides a method for controlling one or more functions of a toilet, according to claim 13.

According to a fourth aspect, the present disclosure provides a non-transitory machine-readable medium having stored thereon a program having a program code for performing the method according to the third aspect, when the program is executed on a processor or a programmable hardware.

According to a fifth aspect, the present disclosure provides a program having a program code for performing the method according to the third aspect, when the program is executed on a processor or a programmable hardware, according to claim 14.

### Brief description of the Figures

Some examples of apparatuses and/or methods will be described in the following by way of example only, and with reference to the accompanying figures, in which
Fig. 1 schematically illustrates a toilet together with an apparatus for controlling one or more functions of the toilet;
Fig. 2 illustrates a process flow for controlling one or more functions of a toilet;
Fig. 3 schematically illustrates exemplary movement trajectories of a user; and
Fig. 4 illustrates a flowchart of an example of a method for controlling one or more functions of a toilet.

### Detailed Description

Some examples are now described in more detail with reference to the enclosed figures. However, other possible examples are not limited to the features of these embodiments described in detail. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

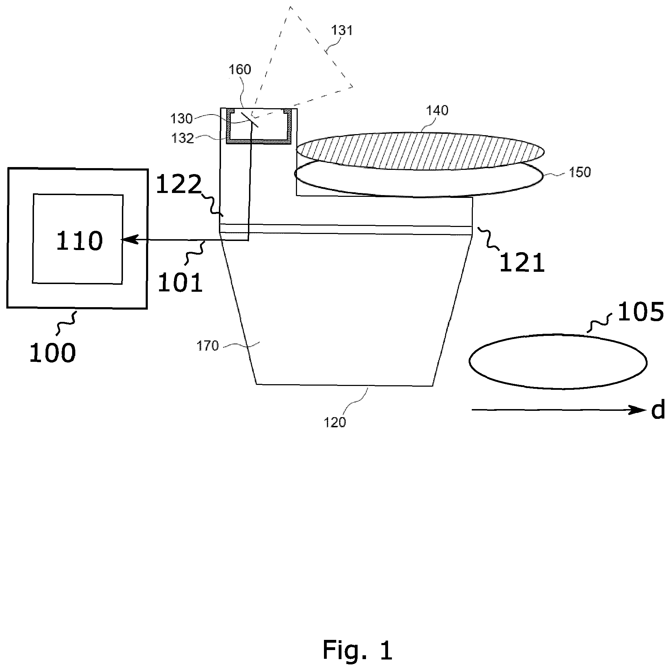

**Fig. 1** schematically illustrates a toilet 120 together with an apparatus 100 for controlling one or more function of the toilet 120. In the example of Fig. 1, the toilet 120 and the apparatus 100 are illustrated as separate elements. Accordingly, in some examples, the apparatus 100 may be external to the toilet 120. For example, a computing cloud or any other suitable external means communicatively coupled to the toilet 120 (e.g., via a wireless connection) may comprise or be the apparatus 100. In other examples, the apparatus 100 may be part of the toilet 120, i.e., be integrated into the toilet 120. In other words, the toilet 120 may comprise the apparatus 100 according to examples of the present disclosure.

The toilet 120 comprises a radar sensor 130. The radar sensor 130 may use various radar operation principles. For example, the radar sensor 130 may use pulsed radar, Frequency-Modulated Continuous Wave (FMCW) radar, Doppler radar or Frequency-Shift Keying (FSK) radar. According to examples, the radar sensor 130 may be an FMCW radar sensor. An operating frequency of the radar sensor 130 may, e.g., be at least 300 MHz and at maximum 300 GHz. In other words, a carrier frequency of the radar signal(s) emitted by the radar sensor 130 may be at least 300 MHz and at maximum 300 GHz. For example, the operating frequency may be 24 GHz, 60 GHz or 77 GHz. The radar sensor 130 comprises transmit circuitry configured to generate one or more transmit radar signals for transmission to the environment. Additionally, the radar sensor 130 comprises receive circuitry configured to process received reflections of the one or more emitted transmit radar signals. The radar sensor 130 comprises N antennas for transmitting the transmit radar signals and M antennas for receiving the one or more reflections, wherein N and M are both positive integers and at least one of N and M is greater than one (i.e., only N may be greater than one, only M may be greater than one or both N and M may be greater than one). In other words, the radar sensor 130 is a radar sensor with N transmit channels and M receive channels. The antennas may be co-located at the same physical location or be located separate from each other at different locations. In other words, the radar sensor 130 may be a monostatic radar sensor or a bistatic radar sensor. In alternative examples, at least part of the antennas (e.g., all antennas) may be external to the radar sensor 130 (i.e., not be part of the radar sensor 130). For example, the external antenna(s) may be one or more metal structures formed on or extending from a Printed Circuit Board (PCB) separate from the radar sensor 130. The radar sensor 130 may be a semiconductor device.

As illustrated in Fig. 1, the radar sensor 130 may be integrated into a casing 160 of the toilet 120. In other words, the radar sensor 130 may be arranged in (within) the casing 160. As indicated in Fig. 1, the casing 160 may be an outer casing of the toilet 120. The outer casing of the toilet 120 refers to an external covering or shell that surrounds the inner components of the toilet 120. It may amount to the visible part of the toilet 120 that one sees when looking at it from the outside. The outer casing of the toilet 120 is not covered by any other material of the toilet.

As indicated in Fig. 1, a Field-of-View (FoV) 131 of the radar sensor 130 extends through the casing 160. The FoV 131 of the radar sensor 130 denotes the spatial area or angular range within which the radar sensor 130 can detect objects or phenomena. In other words, the FoV 131 of the radar sensor 130 describes the region in space that the radar sensor 130 can "see" or sense. According to examples, the radar sensor 130 may be arranged (positioned) such in the toilet 120 that the toilet lid 140 and the toilet seat 150 do not block the FoV 131. Due to this arrangement, only the (e.g., outer) casing 160 of the toilet 120 interferes with the radar waves emitted/received by the radar sensor 130. This may allow to minimize interference of the radar signals emitted/received by the radar sensor 130 with other components of the toilet 120 compared to conventional toilet set-ups. For example, the FoV 131 of the radar sensor 130 may cover the space in front of and/or to the side the toilet 120 such that people or movements in the area in front of and/or to the side the toilet may be sensed (detected).

In the example of Fig. 1, the radar sensor 130 is arranged in (within) a housing 132 (e.g., on a platform or mounting space of the housing 132). The housing 132 comprises outer walls and an opening (gap, hole, window). The radar sensor 130 is arranged such in the housing 132 that the FoV 131 of the radar sensor 131 extends through the opening of the housing 132. The opening of the housing 132 is covered by the (e.g., outer) casing 160 of the toilet 120. Accordingly, the FoV of the radar sensor 130 extends through the opening such that only the casing 160 of the toilet 120 interferes with the radar signals emitted/received by the radar sensor 130. As described above, this may allow to minimize interference of the radar signals emitted/received by the radar sensor 130 with other components of the toilet 120. The casing 160 of the toilet 120 is used as sealing surface for closing the space within the housing 132 and, hence, protecting the radar sensor 130 from environmental conditions (e.g., splash water or human excretions).

The housing 132, in particular its outer walls, may be configured to attenuate radar waves originating from within and/or outside the housing 132 and impinging thereupon. In other words, the housing 132, in particular its outer walls, may be designed or adapted to reduce the strength or intensity of radar waves that come into contact with the housing 132 and that are generated or emitted from one or more sources inside the housing 132 (such as the radar sensor 130), outside the housing 132 or both. Attenuation here refers to the weakening or damping of the radar waves. Accordingly, emission/reception of radar signals in-to/from undesired (non-targeted) spatial areas or regions in space may be avoided. In other words, the radar sensor 130 "sees" or senses the space outside the housing 132 only through the opening in the housing 132. For attenuating the radar waves, the housing 132 may, e.g., comprise radiation-absorbent material.

The housing 132 may be a separate device that can be mounted to the toilet 120. In other examples, the housing 132 may be an integral part of the toilet 120's casing 160 or of an internal structure of the toilet 120 which is facing the casing 160. According to examples, the housing 132 may be formed integrally with the corresponding receiving structure of the toilet 120 in a molding process. In other examples, the housing 132 may be glued or welded (e.g., by means of plastic welding) to a corresponding structure of the toilet 120. In case the housing is part of the outer casing, the opening may be a closable (sealable) opening in the casing 160 of the toilet 120.

It is to be noted that the housing 132 is not mandatory. In other words, the housing 132 is optional and may be omitted. According to examples of the present disclosure, the radar sensor 130 may be arranged in the toilet 120 without the housing 132.

In the example of Fig. 1, the radar sensor 130 is arranged at a back end 122 of the toilet 120. The back end 122 of the toilet 120 is opposite to the front end 121 of the toilet 120. The front end 121 of the toilet 120 refers to the part that faces the user when standing in front of the toilet 120. The back end 122 of the toilet 120 is typically positioned against a wall. However, it is to be noted that the present disclosure is not limited thereto. In general, the radar sensor 130 may be arranged anywhere within the toilet 120. For example, the radar sensor 130 may be arranged anywhere within the toilet 120 under the condition that the radar sensor 130 is only covered by the (outer) casing 160 of the toilet 120. In alternative examples, the radar sensor 130 may, e.g., be integrated into a toilet bowl 170 at its front end (i.e., the part facing the user when standing in front of the toilet 120).

The toilet 120 may comprise various further elements such as a toilet lid 140, a toilet seat 150, a water tank, a flush mechanism, a deodorization system, a water foaming system, etc.

The apparatus 100 for controlling the one or more function of the toilet 120 is communicatively coupled to the radar sensor 130. The apparatus 100 comprises processing circuitry 110. For example, the processing circuitry 110 may be a single dedicated processor, a single shared processor, or a plurality of individual processors, some of which or all of which may be shared, a digital signal processor (DSP) hardware, an application specific integrated circuit (ASIC), a system-on-a-chip (SoC), a neuromorphic processor or a field programmable gate array (FPGA). The processing circuitry 110 may optionally be coupled to, e.g., memory such as read only memory (ROM) for storing software, random access memory (RAM) and/or non-volatile memory. For example, the apparatus 100 may comprise memory configured to store instructions, which when executed by the processing circuitry 110, cause the processing circuitry 110 to perform the steps and methods described herein. The processing circuitry 110 may be arranged outside the housing 132 (i.e., separate from the housing 132) as illustrated in Fig. 1. In other examples, the processing circuitry 110 may be arranged within (inside) the housing 132 together with the radar sensor 130.

The processing circuitry 110 is configured to receive radar data 101 of (output) by the radar sensor 130 and to control the one or more function of the toilet 120 based thereon, as described in more detail below.

Based on the radar data 101, the processing circuitry 110 is configured to determine movement parameters of a user relative to the radar sensor 130 and, hence, the toilet 120. The movement parameters are parameters or variables that the describe the user's movement relative to the radar sensor 130 and, hence, the toilet 120. The movement parameters of the user may, e.g., describe the user's position, direction and velocity relative to the radar sensor 130. For example, the movement parameters of the user may be or comprise a range, an azimuth angle and a speed relative to the radar sensor 130 and, hence, the toilet 120.

The range denotes the distance between the radar sensor 130 and the user. In other words, it represents how far the user is from the radar sensor 130 and, hence, the toilet 120. Various techniques for determining the range of an object such as a user relative to a radar sensor based on radar data output by the radar sensor are known to those skilled in the art. For example, a Fourier transform such as a Fast Fourier-Transformation (FFT) may be applied to the radar data 101 to obtain a range representation of the radar data 101 that shows the range of the user.

The azimuth angle denotes the horizontal angle between a reference direction of the radar sensor 130 and the user. It indicates the user's position from the radar sensor 130 in the horizontal plane. Various techniques for determining the azimuth angle of an object such as a user relative to a radar sensor based on radar data output by the radar sensor are known to those skilled in the art. For example, in an Angle-of-Arrival (AoA) estimation, the phase difference(s) between the reflections of the one or more emitted transmit radar signals received by plural antennas (receive channels) of the radar sensor 130 may be determined and mapped to an azimuth angle.

The speed refers to the velocity of the user relative to the radar sensor 130. For example, the speed may refer to the velocity of the user relative to the radar sensor 130 in the direction toward or away from the radar sensor 130. This is also known as the radial speed. Various techniques for determining the speed of an object such as a user relative to a radar sensor based on radar data output by the radar sensor are known to those skilled in the art. For example, the speed may be determined using the Doppler effect. As the user moves, the frequency and the phase of the reflection of the reflections of the one or more emitted transmit radar signals changes slightly depending on whether the user is moving towards or away from the radar sensor 130. This phase shift, known as the Doppler shift, allows to calculate the user's speed. Two Fourier-transformations may, e.g., be applied subsequently by the processing circuitry 110 to the radar data 101 in order to obtain a range-Doppler representation of the radar data 101 that shows the speed of the user. The two Fourier-transformations are equivalent to a two-dimensional Fourier-transformation on the radar data 101. The processing circuitry 110 may be configured to determine the range representation of the radar data 101 that shows the range of the user in the course of determining the range-Doppler representation of the radar data 101. However, other techniques for determining the speed of the user may be used as well. The user's speed may, e.g., be determined using heuristic. For example, the range representation of the radar data 101 may be determined using a Fourier-transformation as described above and the speed may be determined based on a heuristic calculation of the radar phase at a target range bin, wherein the radar phase calculation takes into account the phase value trend. This may allow to reduce the complexity of the speed determination compared to using two Fourier-transformations. In other examples, to reduce computational power and/or to improve the speed estimation accuracy, n chirps may be joined with historical values such that more chirps may be taken into account for the speed determination (e.g., 2n chirps). In summary, the user's speed may, e.g., be determined using techniques such as partial Fourier-transformation, heuristic Fourier-transformation, heuristic Fourier-transformation with interpolation, etc.

Furthermore, the processing circuitry 110 is configured to determine, based on at least part of the movement parameters of the user, whether the user is within a predefined area 105. The predefined area 105 is a specific area that is monitored by the radar sensor 130 to determine the user's proximity and behavior. The predefined zone is intended to differentiate between users who are approaching the toilet 120 with the intent to use it and those who are simply passing by. The differentiation carried out by the processing circuitry 110 only applies to persons present in the predefined zone 105. For example, the predefined area 105 may be front of the toilet 120. The predefined area 105 in front of the toilet 120 may extend from the front end 121 of the toilet 120 to a predefined distance d away from the front end 121 of the toilet 120. Alternatively or additionally, the predefined area may be at a side of the toilet 120. Accordingly, the predefined area 105 at a side of the toilet 120 may extend from a side end of the toilet 120 to a predefined distance d' away from the side end of the toilet 120. The predefined area 105 may be rectangular, elliptic or circular. However, the present disclosure is not limited thereto. Other shapes may be used as well. The size of the predefined area 105 may be chosen based on how close a person needs to be before they are likely to use the toilet 120. For example, the predefined distance d and/or d' may be 1 m (meter), 0.9 m, 0.8 m, 0.7 m, 0.6 m, 0.5 m, 0.4 m or 0.3 m. The width of the predefined area 105 may be selected to accurately represent a space where a person would position themselves before they are likely to use the toilet 120 (e.g., when approaching the toilet 120 from the side). For example, the width of the predefined area 105 may be 1 m, 0.9 m, 0.8 m, 0.7 m, 0.6 m, 0.5 m, 0.4 m or 0.3 m. The width of the predefined area 105 may further be defined by angular boundaries. For example, the predefined zone 105 may extend from -40 to + 40 degrees, -35 to + 35 degrees, -30 to +30 degrees, -25 to +25 degrees or - 20 to +20 degrees from a centerline of the toilet 120. The centerline of the toilet 120 is an imaginary vertical line that runs down the middle of the toilet 120, dividing it symmetrically into two halves. It is essentially the line of symmetry of the toilet 120 when viewed from the front. It is to be noted that the predefined zone 105 need not be symmetric with respect to the centerline of the toilet 120. According to examples, the predefined zone 105 may be asymmetric with respect to the centerline of the toilet 120. This may be beneficial in various use cases like when the toilet 120 is (to be) installed in a corner of a bathroom.

The determined movement parameters determine the position of the user relative to the radar sensor 130 and, hence, the toilet 120. Accordingly, the determined movement parameters allow to determine whether the user is within the predefined area 105. For example, to determine if the user is in the predefined zone, the processing circuitry 110 may be configured to determine (check) whether a measured range falls within the specified distance threshold d that defines the boundary of the predefined area 105 in front of the toilet 120. For example, if the predefined zone 105 extends from 0 to 0.4 meters in front of the toilet 120, the processing circuitry 110 may verify whether the user's range falls within this distance. Similarly, to determine if the user is in the predefined zone, the processing circuitry 110 may be configured to determine (check) whether a measured azimuth angle falls within the specified angular boundaries that define the boundary of the predefined area 105 in front of the toilet 120. For example, if the predefined zone 105 extends from -30 to +30 degrees from the centerline of the toilet 120, the processing circuitry 110 may verify whether the user's azimuth angle falls within this angular range.

In response to determining that the user is within the predefined area 105, the processing circuitry 110 is configured to determine a movement trajectory of the user based on the movement parameters of the user. The movement trajectory denotes the path taken by the user over time as they move in relation to the radar sensor 130 integrated. The movement trajectory comprises (is characterized by) a time series of positions that indicate how the user's movement parameters such as distance, direction, and speed evolve over time. Various techniques for determining a movement trajectory of an object such as a user based on measured movement parameters of the user are known to those skilled in the art. For example, one or more of Kalman filtering, particle filtering, dead reckoning and integration, curve fitting and polynomial integration, a trained machine-learning model, clustering, statistical inferencing, Bayesian filtering, deterministic estimation and indeterministic estimation may be used to determine the movement trajectory of the user based on the determined movement parameters such as range, azimuth angle and speed of the user.

In addition, the processing circuitry 110 is configured to determine, based on the movement trajectory, whether the user is slowing down while approaching the toilet 120. The movement trajectory represents how the user's position and movement evolve over time, providing a dynamic picture of their path. The movement trajectory includes information about the direction of the user, e.g., determined from the measured azimuth angle and range. If the trajectory indicates that the user is moving closer (range is decreasing) and towards the toilet 120, the processing circuitry 110 may determine that the user approaches the toilet 120. If the gradient (i.e., the rate of change of speed) along the movement trajectory is further negative (i.e., the speed is decreasing), the processing circuitry 110 may determine that the user is slowing down while approaching

In response to determining that the user is slowing down while approaching the toilet 120, the processing circuitry 110 is configured to trigger the one or more function of the toilet 120. The user slowing down while approaching the toilet 120 is a strong indicator of the user intending to use the toilet 120. On the other hand, the processing circuitry 110 may be configured to prevent triggering of (to not trigger, to forbid/inhibit activation of) the one or more function of the toilet 120 in response to determining that the user is not slowing down while approaching the toilet. The user not slowing down while approaching the toilet 120 is a strong indicator of the user simply by-passing the toilet 120 without the intent of using it. Accordingly, the apparatus 100 may distinguish between users who are intending to use the toilet 120 and those who are merely passing by. This reduces false triggers, where the one or more function of the toilet 120 are triggered unnecessarily for a by-passer. Reducing false triggering of the one or more function of the toilet 120 helps save energy and resources, as fewer unnecessary executions of the one or more function of the toilet 120 mean less power and resource consumption. This contributes to an overall reduction in energy and resource usage, improving the toilet 120's efficiency. Furthermore, reducing false triggering of the one or more function of the toilet 120 improves the user experience as unnecessary execution of the one or more function of the toilet 120 is avoided. Unlike imaging-based sensors, which may compromise privacy, the use of radar technology allows user detection without capturing identifiable visual information. This is especially important in a bathroom setting where user privacy is a critical concern.

The one or more function of the toilet 120 may be manifold and relate to various aspects of one or more of user convenience, cleanliness and comfort. In the following a few exemplary function are described in greater detail. However, it is to be noted that the present disclosure is not limited thereto.

For example, the one or more function of the toilet 120 may comprise opening the toilet lid 140 of the toilet 120. This ensures a hands-free operation, which enhances hygiene and convenience for the user. For example, the toilet 120 may comprise an electro-mechanic drive (not illustrated in Fig. 1) for opening (and optionally also closing) the toilet lid 140. Accordingly, the processing circuitry 110 may be configured to trigger the one or more function of the toilet 120 by outputting a control signal to the electro-mechanic drive causing the electro-mechanic drive to open the toilet lid 140.

Additionally or alternatively, the one or more function of the toilet 120 may comprise opening of the toilet seat 150 of the toilet 120. In other words, apart or in addition to the toilet lid 140, the toilet seat 150 itself may also be opened automatically. This enhances accessibility and convenience for some users. For example, the toilet 120 may comprise an electro-mechanic drive (not illustrated in Fig. 1) for opening (and optionally also closing) the toilet seat 150. Accordingly, the processing circuitry 110 may be configured to trigger the one or more function of the toilet 120 by outputting a control signal to the electro-mechanic drive causing the electro-mechanic drive to open toilet seat 150. In some examples, the electro-mechanic drive may be for opening both the toilet lid 140 and the toilet seat 150.

Further additionally or alternatively, the one or more function of the toilet 120 may comprise flushing the toilet 120. This pre-flush ensures that the toilet bowl 170 is clean and ready for use, potentially eliminating any residual contents from previous use. For example, the toilet 120 may comprise a flush mechanism (not illustrated in Fig. 1) for flushing the toilet 120. Accordingly, the processing circuitry 110 may be configured to trigger the one or more function of the toilet 120 by outputting a control signal to the flush mechanism causing the flush mechanism to flush the toilet 120.

Still further additionally or alternatively, the one or more function of the toilet 120 may comprise heating of the toilet seat 150. For example, the toilet 120 may comprise a heating mechanism (not illustrated in Fig. 1) for heating the toilet seat 150. Accordingly, the processing circuitry 110 may be configured to trigger the one or more function of the toilet 120 by outputting a control signal to the heating mechanism causing the heating mechanism to heat the toilet seat 150. The temperature of the toilet seat 150 should be stable within a very short period of time after the user sits on the toilet seat 150 (e.g., within one second). Heating up the toilet seat 150 takes time. Triggering the heating of the toilet seat 150 once it is determined that a user is approaching with the intention to use the toilet 120 allows to extend the available heat-up time such that a stable temperature of the toilet seat 150 may be achieved quickly after the user sits on the toilet seat 150.

Further additionally or alternatively, the one or more function of the toilet 120 may comprise deodorization of air in and/or around the toilet 120 (e.g., air in the toilet bowl 170 or air above the toilet bowl 170). The deodorization ensures that unpleasant odors in and around the toilet area are removed. For example, the toilet 120 may comprise a deodorization mechanism (not illustrated in Fig. 1) for deodorization of air in and/or around the toilet 120. Accordingly, the processing circuitry 110 may be configured to trigger the one or more function of the toilet 120 by outputting a control signal to the deodorization mechanism causing the deodorization mechanism to deodorize air in and/or around the toilet 120 (e.g. by sucking/pulling and filtering the air through an activated carbon filter or the like and/or using odor neutralizing agents such as chemical sprays or natural essential oils).

Additionally or alternatively, the one or more function of the toilet 120 may comprise moistening of the toilet bowl 170 of the toilet 120. This ensures that the inside of the toilet bowl 170 is pre-moistened before use, making it antifouling and reducing the chance of waste sticking to the surface. For example, the processing circuitry 110 may be configured to trigger the one or more function of the toilet 120 by outputting a control signal to the flush mechanism causing the flush mechanism to moisten the toilet bowl 170.

Further additionally or alternatively, the one or more function of the toilet 120 may comprise foaming of water in the toilet 120. Creating a layer of foam helps reduce splashing during use and contributes to a more hygienic experience. For example, the toilet 120 may comprise a foaming mechanism (not illustrated in Fig. 1) for foaming of water in the toilet 120. Accordingly, the processing circuitry 110 may be configured to trigger the one or more function of the toilet 120 by outputting a control signal to the foaming mechanism causing the foaming mechanism to foam water in the toilet 120.

By selectively triggering one or more of the above function, when it is determined that the user likely intends to use the toilet 120, the toilet 120 is in a ready state, ensuring that the user experiences a clean and comfortable environment. It also ensures that energy and resources are not wasted when the user is unlikely to use the toilet 120. The above function contribute to a convenient and comfortable user experience. Users do not need to manually interact with the toilet 120, which is particularly beneficial for individuals with limited mobility.

As described above, the processing circuitry 110 is configured to trigger the one or more function of the toilet 120 in response to determining that the user is slowing down while approaching the toilet 120. On the other hand, the processing circuitry 110 may be configured to prevent triggering of the one or more function of the toilet 120 in response to determining, based on the movement trajectory, that the user is moving away from the toilet 120. The user moving away from the toilet 120 is a strong indicator of the user not intending to use the toilet 120. For example, if a user walks past the toilet 120 and enters the predefined zone 105 briefly, the apparatus 100 will detect their presence. As the user continues moving, the movement trajectory indicates that the user is moving away. The apparatus 100, based on this movement trajectory, will prevent the toilet 120 from opening its lid 140 or performing any other function since it determines that the user has no intention of using the toilet 120. This ensures that toilet functions are only activated when necessary, based on the user's intent. By preventing functions from being triggered when the user moves away, the apparatus 100 effectively reduces false activations that could occur when someone simply walks near the toilet 120 without intending to use it.

The processing circuitry 110 may further be configured to trigger the one or more function of the toilet 120 in response to determining, based on the movement trajectory, that the user is not approaching the toilet 120 and remains in the predefined area for at least a predefined period of time. On the other hand, in response to determining, based on the movement trajectory, that the user is not approaching the toilet 120 and remains in the predefined area for less than the predefined period of time, the processing circuitry 110 may be configured to prevent triggering of the one or more function of the toilet 120. The predefined period of time acts as a filter to differentiate between a user pausing with intent and one who is simply lingering briefly or passing by. The predefined time may, e.g., two, three, four or five seconds. For instance, if the predefined period is set to two to three seconds, the apparatus 100 only proceeds to trigger a function if the user remains within the predefined area for this duration. This enhances user convenience by anticipating their actions even if they do not explicitly approach the toilet 120 directly or quickly. For example, a user may approach the toilet 120 but then pause in the predefined area 105, perhaps to adjust their clothing or assess the environment. They do not continue moving toward the toilet 120 (i.e., the range and, hence, the movement trajectory remains relatively constant). If the apparatus 100 detects that the user stays within the predefined area 105 for at least the predefined period of time, it concludes that they are intending to use the toilet 120, even though they are not moving closer. Thus, the system may automatically trigger functions like opening the toilet lid 140 to prepare for use. In another example, a user might stand in front of the toilet 120, hesitating or preparing to use it, without explicitly approaching closer. The apparatus 100 uses the time duration as an indicator of intent, understanding that users who linger in front of the toilet for several seconds likely intend to use it. This improves user experience by not requiring users to make explicit, continuous movements towards the toilet 120 for the apparatus 100 to respond. If a user walks near the toilet and steps into the predefined area 105 but only pauses for a brief moment (e.g., less than 2 seconds) before moving away, the apparatus 100 detects that the user is not approaching and that their presence in the area is very short-lived. Based on this, the apparatus 100 concludes that the user does not intend to use the toilet 120 and therefore prevents any toilet functions from being triggered, such as opening the toilet lid 140 or initiating seat heating.

Summarizing the above examples: In response to determining that the user is within the predefined area 105, the determined movement trajectory is analyzed by the processing circuitry 110 to determine whether the user intends (is likely to) use the toilet 120. The one or more function of the toilet 120 are only triggered if it is determined that the user intends (is likely to) use the toilet 120. Else, the processing circuitry 110 prevents triggering of the one or more function of the toilet 120.

According to examples, the movement trajectory of the user may be determined by using a time series of radar data. The radar sensor 130 continuously outputs the radar data 101 over time. Accordingly, the processing circuitry 110 may be configured to determine, based on the radar data 101, a respective time series for the movement parameters (e.g., range, azimuth angle and speed) of the user. A time series is a sequence of data points in chronological order for succeeding time instants. Each data point indicates the respective quantity (e.g., range, azimuth angle or speed) for the respective time instant. For example, the time series for the movement parameters of the user may be continuous streams of data points over time. The data points may be equally spaced in time but need not. Accordingly, the processing circuitry 110 may be configured to determine the movement trajectory of the user based on the respective time series for the movement parameters of the user. By combining the time series for the movement parameters of the user, the processing circuitry 110 may construct a detailed trajectory of the user's movement, which provides a comprehensive understanding of the user's behavior near the toilet. For example, the processing circuitry 110 may use a sliding window and determine the movement trajectory based on values indicated by the respective time series for the movement parameters of the user for, e.g., the last 0.5 seconds, 1 second, 1.5 seconds, 2 seconds or 2.5 seconds.

The movement trajectory may represent the actual observed path that the user has taken up to the current point in time, based on the measurements of the movement parameters (e.g., range, azimuth angle, and speed) as captured by the radar sensor 130. In other words, the movement trajectory may provide a history of the user's movement to allow the apparatus 100 to make decisions based on the user's past behavior. However, the present disclosure is not limited thereto. In alternative examples, the movement trajectory may be a predicted trajectory. Instead of just using the collected data directly, the apparatus 100 attempts to anticipate the future movement of the user based on historical data points. In other words, for determining the movement trajectory of the user, the processing circuitry 110 may be configured to predict the movement trajectory. Predicting the movement trajectory anticipates the user's next (future) position or movement. Instead of only analyzing the current data for the movement parameters (e.g., range, azimuth angle, and speed), the processing circuitry 110 uses these measurements over time to predict where the user is likely to move next. The prediction may, e.g., be based on trends in the time series data that the radar sensor 130 collects (as described above). Various techniques such as Kalman filtering, trained machine-learning models or polynomial or curve fitting may be used to predict the movement trajectory based on the movement parameters (e.g., range, azimuth angle and speed) of the user. Predicting the movement trajectory helps the apparatus 100 anticipate whether the user is likely to use the toilet 120, move away, or simply linger nearby. This allows the apparatus 100 to prepare in advance, providing a more responsive experience. By predicting the movement, the apparatus 100 is able to make faster decisions about triggering specific toilet functions. If the prediction indicates that the user is likely approaching the toilet 120 with the intention to use it, one or more function of the toilet 120 such as opening the lid 140 may be performed before the user actually stops in front of the toilet 120, thus reducing waiting times.

Depending on the installation position within the toilet 120, the radar sensor 130 may face several challenges such as signal distortion due to the casing structure and metallic reflective surfaces. These distortions affect the phase of the reflections of the one or more emitted transmit radar signals (i.e., the radar signals) received by the multiple antennas of the radar sensor 130, which can lead to inaccuracies when calculating the azimuth angle. Phase distortion may, e.g., occur when the reflections of the one or more emitted transmit radar signals reflect off multiple and/or bent surfaces of the toilet 120 before reaching the receiving antennas of the radar sensor 130, causing inaccuracies in the measured phase difference between the received reflections. Since the azimuth angle is determined using this phase difference, the result can be incorrect if these distortions are not corrected. The integration of the radar sensor 130 into the toilet 120 may lead to a non-linear phase pattern that complicates the determination of the user's true azimuth angle. As a result, without correction, the apparatus 100 might incorrectly determine the user's lateral position relative to the toilet 120, potentially leading to errors in triggering toilet functions.

According to the invention, these distortions are compensated when determining the azimuth angle based on the radar data 101. The processing circuitry 110 is configured to determine an auxiliary value for the azimuth angle of the user based on the radar data 101. For example, the auxiliary value for the azimuth angle of the user may be determined as described in an AoA estimation by determining the phase difference(s) between the reflections of the one or more emitted transmit radar signals received by plural antennas (receive channels) of the radar sensor 130 and mapping them to an auxiliary value for the azimuth angle of the user. Further, the processing circuitry 110 is configured to determine, based on the auxiliary value for the azimuth angle of the user, a phase difference between radar signals (i.e., reflections of the one or more emitted transmit radar signals) received by the plurality of receive channels of the radar sensor 130. For example, the mono-pulse method may be used to determine the phase difference between radar signals received by the plurality of receive channels of the radar sensor 130. However, the present disclosure is not limited thereto. Other techniques such as phase interferometry, AoA estimation using the MUltiple Signal Classification (MUSIC) algorithm or Maximum Likelihood Estimation (MLE) may be used. Additionally, the processing circuitry 110 is configured to determine the azimuth angle of the user by applying a mapping function to the determined phase difference. The mapping function *f* is a function that relates phase differences ΔΦ to azimuth angles Θ: $Θ = f \left(ΔΦ\right)$ (1)

For example, the mapping function may be based on simulation and/or lab/factory/calibration measurements to allow refinement of the azimuth angle given the distorted radar data 101. The angle refinement allows to determine the user's horizontal position more accurately, which in turn improves the accuracy of the movement trajectory and, hence, the decision(s) regarding function triggering.

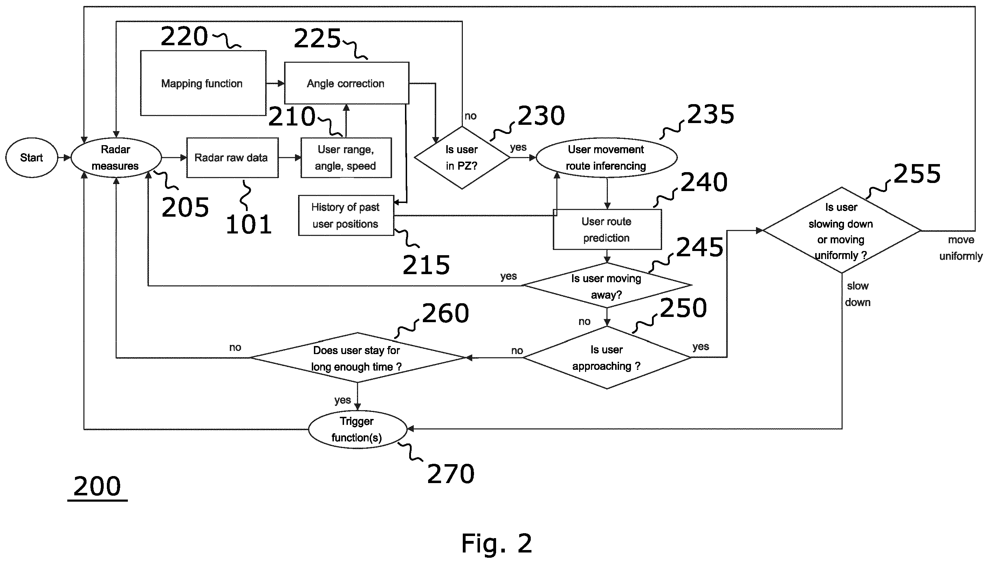

An exemplary process flow 200 for further highlighting the above radar data processing is illustrated in **Fig. 2****.** As described above, radar measurements are performed at 205 continuously by the radar sensor 130 and the radar (raw) data 101 are obtained. Then, at 210, the movement parameters like range, azimuth angle and speed of the user relative to the radar sensor 130 are determined based on the radar data 101. The azimuth angle of the user relative to the radar sensor 130 is refined at 225 using the mapping function 220 with the azimuth angles determined based on the radar data 101 at 210 being the auxiliary values for the azimuth angle of the user. In particular, a respective time series for the movement parameters of the user is determined based on the continuously obtained radar data 101. Previously determined data points for the movement parameters of the user are stored in a history/memory/database 215.

Then, at 230, it is determined whether the user is within the predefined area (zone) 105 based on at least part of the movement parameters such as the range and the (refined) azimuth angle of the user. In response to determining that the user is not in the predefined area 105, the process flow 200 returns to 205 such that triggering of the one or more function of the toilet 120 is prevented. On the other hand, in response to determining that the user is in the predefined area 105, the movement trajectory of the user is determined at 235. As described above, the determination may comprise a prediction of the movement trajectory, e.g., via a Kalman filter, as shown at 240 in Fig. 2. The movement trajectory of the user is determined based on the respective time series for the movement parameters (e.g., range, (refined) azimuth angle and speed) of the user.

Based on the movement trajectory of the user, it is determined whether the user is moving away from the toilet 120 at 245. In response to determining the user is moving away from the toilet 120, the process flow 200 returns to 205 such that triggering of the one or more function of the toilet 120 is prevented. In response to determining the user is not moving away from the toilet 120, it is determined at 250 whether the user is approaching the toilet 120.

In response to determining the user is approaching the toilet 120, it is determined whether the user is slowing down at 255. In response to determining that the user is not slowing down (e.g., the user is moving uniformly), the process flow 200 returns to 205 such that triggering of the one or more function of the toilet 120 is prevented. On the other hand, in response to determining that the user is slowing down, the one or more function of the toilet 120 are triggered at 270.

In response to determining at 250 that the user is not approaching the toilet 120, it is determined at 260 whether the user remains in the predefined area for at least the predefined period of time. In response to determining that the user remains in the predefined area for less than the predefined period of time, the process flow 200 returns to 205 such that triggering of the one or more function of the toilet 120 is prevented. On the other hand, in response to determining that the user remains in the predefined area for at least the predefined period of time, the one or more function of the toilet 120 are triggered at 270.

The process flow 200 allows to distinguish between users who are intending to use the toilet 120 and those who are merely passing by. This reduces false triggers and, hence, helps save energy and resources and improves the user experience.

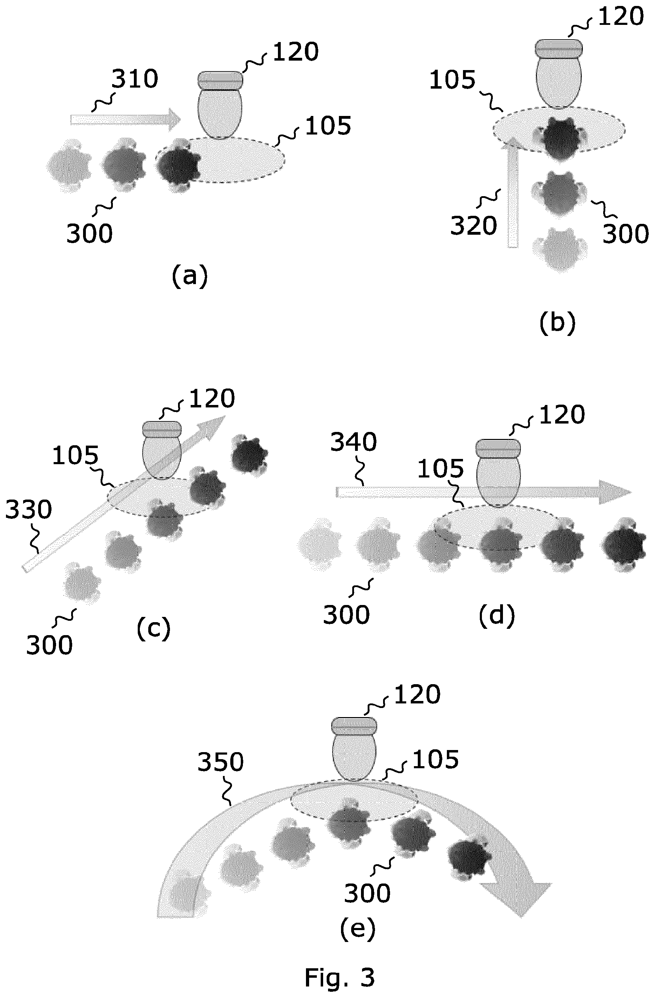

A few exemplary movement trajectories are illustrated in **Fig. 3** to highlight the improved toilet control according to the proposed technology.

In subfigure (a) of Fig. 3, as indicated by the movement trajectory 310, the user approaches the toilet 120 from the side. Once it is determined that the user is within the predefined area 105, it is therefore determined that the user 300 approaches the toilet 120. As the user 300 slows down while approaching the toilet 120, the one or more function of the toilet 120 are triggered.

In subfigure (b) of Fig. 3, as indicated by the movement trajectory 320, the user approaches the toilet 120 from the front. Once it is determined that the user is within the predefined area 105, it is therefore determined that the user 300 approaches the toilet 120. The user 300 slows down and stops in front of the toilet. As the user 300 slows down while approaching the toilet 120, the one or more function of the toilet 120 are triggered.

In subfigure (c) of Fig. 3, as indicated by the movement trajectory 330, the user 300 walks steadily such that the user first approaches the toilet 120 from an angle, passes the toilet 120 and then moves away from the toilet 120 again. Once it is determined that the user is within the predefined area 105, it is therefore determined that the user 300 is not slowing down while approaching the toilet 120. Accordingly, triggering of the one or more function of the toilet 120 is prevented.

In subfigure (d) of Fig. 3, as indicated by the movement trajectory 340, the user 300 walks steadily such that the user first approaches the toilet 120 from the side, passes the toilet 120 and then moves away from the toilet 120 again. Once it is determined that the user is within the predefined area 105, it is therefore determined that the user 300 is not slowing down while approaching the toilet 120. Accordingly, triggering of the one or more function of the toilet 120 is prevented.

In subfigure (e) of Fig. 3, as indicated by the movement trajectory 350, the user 300 first approaches the toilet 120 from an angle until the user reaches the predefined area 105 and then moves away from the toilet 120 again. Once it is determined that the user is within the predefined area 105, it is therefore determined the user moves aways from the toilet 120. Accordingly, triggering of the one or more function of the toilet 120 is prevented.

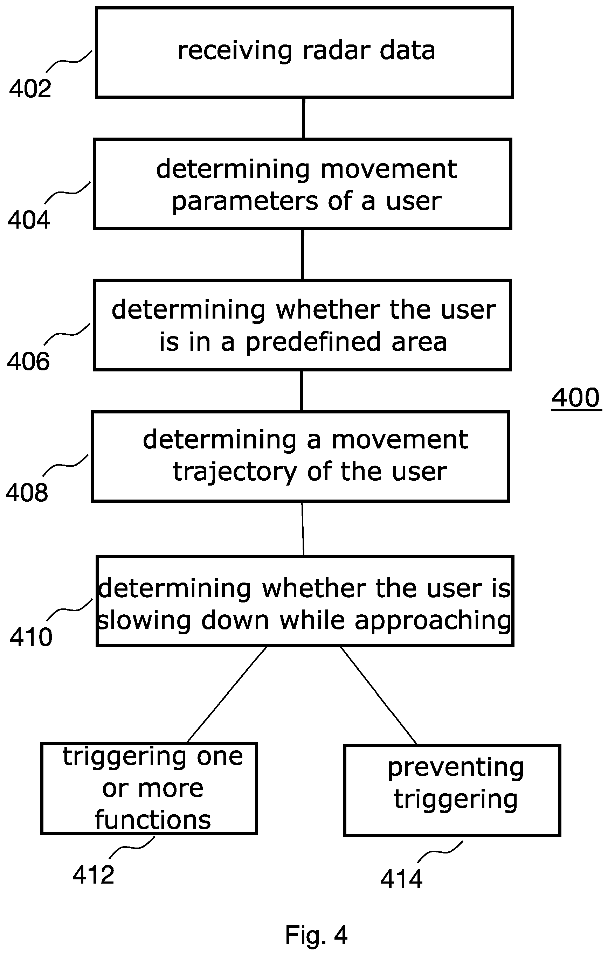

For further highlighting the toilet control described above, **Fig. 4** illustrates a flowchart of a method 400 for controlling one or more function of a toilet. The method 400 comprises receiving 402 radar data of (output by) a radar sensor integrated into the toilet and determining 404 movement parameters of a user relative to the radar sensor based on the radar data. Furthermore, the method 400 comprises determining 406, based on at least part of the movement parameters of the user, whether the user is within a predefined area. In response to determining that the user is within the predefined area, the method 400 comprises determining 408 a movement trajectory of the user based on the movement parameters of the user. In addition, the method 400 comprises determining 410, based on the movement trajectory, whether the user is slowing down while approaching the toilet. In response to determining that the user is slowing down while approaching the toilet, the method 400 comprises triggering 412 the one or more function of the toilet. As described above, the method 400 may comprise preventing 414 triggering the one or more function of the toilet in response to determining that the user is not slowing down while approaching the toilet.

Analogously to what is described above, the method 400 allows to distinguish between users who are intending to use the toilet and those who are merely passing by. This reduces false triggers. Reducing false triggering of the one or more function of the toilet helps save energy and resources, as fewer unnecessary executions of the one or more function of the toilet mean less power and resource consumption. Furthermore, reducing false triggering of the one or more function of the toilet improves the user experience as unnecessary execution of the one or more function of the toilet is avoided.

More details and aspects of the method 400 are explained in connection with the proposed technique or one or more examples described above (e.g., Fig. 1 to Fig. 3). The method 400 may comprise one or more additional optional features corresponding to one or more aspects of the proposed technique or one or more examples described above.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), ASICs, integrated circuits (ICs) or SoCs programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

## Claims

1. An apparatus (100) for controlling one or more function of a toilet (120), the apparatus (100) comprising processing circuitry (110) configured to:
receive radar data (101) of a radar sensor (130) integrated into the toilet (120);
determine movement parameters of a user relative to the radar sensor (130) based on the radar data (101);
determine, based on at least part of the movement parameters of the user, whether the user is within a predefined area;
in response to determining that the user is within the predefined area, determine a movement trajectory of the user based on the movement parameters of the user;
determine, based on the movement trajectory, whether the user is slowing down while approaching the toilet (120);
trigger the one or more function of the toilet (120) in response to determining that the user is slowing down while approaching the toilet (120),
**characterized in that** the movement parameters of the user comprise an azimuth angle of the user, and wherein, for determining the azimuth angle of the user, the processing circuitry (110) is configured to:
determine an auxiliary value of the azimuth angle which is uncompensated for signal distortions of radar signals received by a plurality of receive channels of the radar sensor;
determine, based on the auxiliary value for the azimuth angle of the user, a phase difference between the radar signals received by a plurality of receive channels of the radar sensor; and
determine the azimuth angle of the user by applying a mapping function to the determined phase difference, wherein the mapping function relates phase differences to azimuth angles, thereby, the azimuth angle being compensated for said signal distortions.

2. The apparatus (100) of claim 1, wherein the processing circuitry (110) is configured to prevent triggering of the one or more function of the toilet (120) in response to determining that the user is not slowing down while approaching the toilet (120).

3. The apparatus (100) of claim 1 or claim 2, wherein the processing circuitry (110) is configured to trigger the one or more function of the toilet (120) in response to determining, based on the movement trajectory, that the user is not approaching the toilet (120) and remains in the predefined area for at least a predefined period of time.

4. The apparatus (100) of claim 3, wherein the processing circuitry (110) is configured to prevent triggering of the one or more function of the toilet (120) in response to determining, based on the movement trajectory, that the user is not approaching the toilet (120) and remains in the predefined area for less than the predefined period of time.

5. The apparatus (100) of any one of claims 1 to 4, wherein the processing circuitry (110) is configured to prevent triggering of the one or more function of the toilet (120) in response to determining, based on the movement trajectory, that the user is moving away from the toilet (120).

6. The apparatus (100) of any one of claims 1 to 5, wherein the processing circuitry (110) is configured to:
determine, based on the radar data (101), a respective time series for the movement parameters of the user; and
determine the movement trajectory of the user based on the respective time series for the movement parameters of the user.

7. The apparatus (100) of any one of claims 1 to 6, wherein, for determining the movement trajectory of the user, the processing circuitry (110) is configured to predict the movement trajectory.

8. The apparatus (100) of any one of claims 1 to 7, wherein the predefined area extends from a front end (121) of the toilet (120) to a predefined distance (d) away from the front end of the toilet (120).

9. The apparatus (100) of any one of claims 1 to 8, wherein the one or more function of the toilet (120) comprise one or more of opening a toilet lid (140) of the toilet (120), opening of a toilet seat (150) of the toilet (120), flushing the toilet (120), heating of the toilet seat (150), deodorization of air in and/or around the toilet (120), moistening of a toilet bowl (170) of the toilet (120), foaming of water in the toilet (120).

10. A toilet (120) comprising:
a radar sensor (130); and
an apparatus (100) according to any one of claims 1 to 9 for controlling one or more function of the toilet (120).

11. The toilet (120) of claim 10, wherein the one or more function of the toilet (120) comprise at least opening a toilet lid (140) of the toilet (120), wherein the toilet (120) further comprises an electro-mechanic drive for opening the toilet lid (140), and wherein the processing circuitry (110) is configured to trigger the one or more function of the toilet (120) by outputting a control signal to the electro-mechanic drive causing the electro-mechanic drive to open the toilet lid (140).

12. The toilet (120) of claim 10 or claim 11, wherein the radar sensor (130) is integrated into a casing of the toilet (120).

13. A method (400) for controlling one or more function of a toilet, the method (400) comprising:
receiving (402) radar data of a radar sensor integrated into the toilet;
determining (404) movement parameters of a user relative to the radar sensor based on the radar data;
determining (406), based on at least part of the movement parameters of the user, whether the user is within a predefined area;
in response to determining that the user is within the predefined area, determining (408) a movement trajectory of the user based on the movement parameters of the user;
determining (410), based on the movement trajectory, whether the user is slowing down while approaching the toilet;
triggering (412) the one or more function of the toilet in response to determining that the user is slowing down while approaching the toilet;
**characterized in that** the movement parameters of the user comprise an azimuth angle of the user, and wherein determining the azimuth angle of the user comprises:
determining an auxiliary value of the azimuth angle which is uncompensated for signal distortions of radar signals received by a plurality of receive channels of the radar sensor;
determining, based on the auxiliary value for the azimuth angle of the user, a phase difference between the radar signals received by a plurality of receive channels of the radar sensor; and
determining the azimuth angle of the user by applying a mapping function to the determined phase difference, wherein the mapping function relates phase differences to azimuth angles, thereby, the azimuth angle being compensated for said signal distortions.

14. A program having a program code for performing the method according to claim 13, when the program is executed on a processor or a programmable hardware of a toilet (120) according to claim 10.

## Patentansprüche

1. Vorrichtung (100) zum Steuern einer oder mehrerer Funktionen einer Toilette (120), wobei die Vorrichtung (100) eine Verarbeitungsschaltungsanordnung (110) umfasst, die zu Folgendem ausgelegt ist:
Empfangen von Radardaten (101) eines in die Toilette (120) integrierten Radarsensors (130);
Bestimmen von Bewegungsparametern eines Benutzers relativ zu dem Radarsensor (130) basierend auf den Radardaten (101);
Bestimmen, ob sich der Benutzer innerhalb eines vordefinierten Bereichs befindet, basierend auf mindestens einem Teil der Bewegungsparameter des Benutzers;
Bestimmen einer Bewegungsbahn des Benutzers basierend auf den Bewegungsparametern des Benutzers als Reaktion auf das Bestimmen, dass sich der Benutzer innerhalb des vordefinierten Bereichs befindet;
Bestimmen, ob der Benutzer langsamer wird, während er sich der Toilette (120) nähert, basierend auf der Bewegungsbahn;
Auslösen der einen oder der mehreren Funktionen der Toilette (120) als Reaktion auf das Bestimmen, dass der Benutzer langsamer wird, während er sich der Toilette (120) nähert,
**dadurch gekennzeichnet, dass** die Bewegungsparameter des Benutzers einen Azimutwinkel des Benutzers umfassen, wobei die Verarbeitungsschaltungsanordnung (110) zum Bestimmen des Azimutwinkels des Benutzers ausgelegt ist:
Bestimmen eines Hilfswerts des Azimutwinkels, der für Signalverzerrungen von Radarsignalen, die durch mehrere Empfangskanäle des Radarsensors empfangen werden, unkompensiert ist;
Bestimmen einer Phasendifferenz zwischen den Radarsignalen, die durch mehrere Empfangskanäle des Radarsensors empfangen werden, basierend auf dem Hilfswert für den Azimutwinkel des Benutzers; und
Bestimmen des Azimutwinkels des Benutzers durch Anwenden einer Abbildungsfunktion auf die bestimmte Phasendifferenz, wobei die Abbildungsfunktion Phasendifferenzen mit Azimutwinkeln in Beziehung setzt, wodurch der Azimutwinkel für die Signalverzerrungen kompensiert wird.

2. Vorrichtung (100) nach Anspruch 1, wobei die Verarbeitungsschaltungsanordnung (110) dazu ausgelegt ist, ein Auslösen der einen oder mehreren Funktionen der Toilette (120) als Reaktion auf das Bestimmen, dass der Benutzer nicht langsamer wird, während er sich der Toilette (120) nähert, zu verhindern.

3. Vorrichtung (100) nach Anspruch 1 oder Anspruch 2, wobei die Verarbeitungsschaltungsanordnung (110) dazu ausgelegt ist, die eine oder die mehreren Funktionen der Toilette (120) als Reaktion auf das Bestimmen, dass sich der Benutzer der Toilette (120) nicht nähert und mindestens für eine vordefinierte Zeitdauer in dem vordefinierten Bereich bleibt, basierend auf der Bewegungsbahn, auszulösen.

4. Vorrichtung (100) nach Anspruch 3, wobei die Verarbeitungsschaltungsanordnung (110) dazu ausgelegt ist, ein Auslösen der einen oder der mehreren Funktionen der Toilette (120) als Reaktion auf das Bestimmen, dass sich der Benutzer der Toilette (120) nicht nähert und für weniger als den vordefinierten Zeitraum in dem vordefinierten Bereich bleibt, basierend auf der Bewegungsbahn, zu verhindern.

5. Vorrichtung (100) nach einem der Ansprüche 1 bis 4, wobei die Verarbeitungsschaltungsanordnung (110) dazu ausgelegt ist, ein Auslösen der einen oder der mehreren Funktionen der Toilette (120) als Reaktion auf das Bestimmen, dass sich der Benutzer von der Toilette (120) weg bewegt, basierend auf der Bewegungsbahn, zu verhindern.

6. Vorrichtung (100) nach einem der Ansprüche 1 bis 5, wobei die Verarbeitungsschaltungsanordnung (110) zu Folgendem ausgelegt ist:
Bestimmen einer jeweiligen Zeitreihe für die Bewegungsparameter des Benutzers basierend auf den Radardaten (101); und
Bestimmen der Bewegungsbahn des Benutzers basierend auf der jeweiligen Zeitreihe für die Bewegungsparameter des Benutzers.

7. Vorrichtung (100) nach einem der Ansprüche 1 bis 6, wobei zum Bestimmen der Bewegungsbahn des Benutzers die Verarbeitungsschaltungsanordnung (110) dazu ausgelegt ist, die Bewegungsbahn vorherzusagen.

8. Vorrichtung (100) nach einem der Ansprüche 1 bis 7, wobei sich der vordefinierte Bereich von einem vorderen Ende (121) der Toilette (120) zu einem vordefinierten Abstand (d) weg von dem vorderen Ende der Toilette (120) erstreckt.

9. Vorrichtung (100) nach einem der Ansprüche 1 bis 8, wobei die eine oder die mehreren Funktionen der Toilette (120) eine oder mehrere von Öffnen eines Toilettendeckels (140) der Toilette (120), Öffnen eines Toilettensitzes (150) der Toilette (120), Spülen der Toilette (120), Erwärmen des Toilettensitzes (150), Desodorieren von Luft in und/oder um die Toilette (120), Befeuchten einer Toilettenschüssel (170) der Toilette (120) und Aufschäumen von Wasser in der Toilette (120) umfassen.

10. Toilette (120), die Folgendes umfasst:
einen Radarsensor (130); und
eine Vorrichtung (100) nach einem der Ansprüche 1 bis 9 zum Steuern einer oder mehrerer Funktionen der Toilette (120).

11. Toilette (120) nach Anspruch 10, wobei die eine oder die mehreren Funktionen der Toilette (120) mindestens Öffnen eines Toilettendeckels (140) der Toilette (120) umfassen, wobei die Toilette (120) ferner einen elektromechanischen Antrieb zum Öffnen des Toilettendeckels (140) umfasst und wobei die Verarbeitungsschaltungsanordnung (110) dazu ausgelegt ist, die eine oder die mehreren Funktionen der Toilette (120) auszulösen, indem sie an den elektromechanischen Antrieb ein Steuersignal ausgibt, das bewirkt, dass der elektromechanische Antrieb den Toilettendeckel (140) öffnet.

12. Toilette (120) nach Anspruch 10 oder Anspruch 11, wobei der Radarsensor (130) in ein Gehäuse der Toilette (120) integriert ist.

13. Verfahren (400) zum Steuern einer oder mehrerer Funktionen einer Toilette, wobei das Verfahren (400) Folgendes umfasst:
Empfangen (402) von Radardaten eines in die Toilette integrierten Radarsensors;
Bestimmen (404) von Bewegungsparametern eines Benutzers relativ zu dem Radarsensor basierend auf den Radardaten;
Bestimmen (406), ob sich der Benutzer innerhalb eines vordefinierten Bereichs befindet, basierend auf mindestens einem Teil der Bewegungsparameter des Benutzers;
Bestimmen (408) einer Bewegungsbahn des Benutzers basierend auf den Bewegungsparametern des Benutzers als Reaktion auf das Bestimmen, dass sich der Benutzer innerhalb des vordefinierten Bereichs befindet;
Bestimmen (410), ob der Benutzer langsamer wird, während er sich der Toilette nähert, basierend auf der Bewegungsbahn;
Auslösen (412) der einen oder mehreren Funktionen der Toilette als Reaktion auf das Bestimmen, dass der Benutzer langsamer wird, während er sich der Toilette nähert;
**dadurch gekennzeichnet, dass** die Bewegungsparameter des Benutzers einen Azimutwinkel des Benutzers umfassen, wobei das Bestimmen des Azimutwinkels des Benutzers Folgendes umfasst:
Bestimmen eines Hilfswerts des Azimutwinkels, der für Signalverzerrungen von Radarsignalen, die durch mehrere Empfangskanäle des Radarsensors empfangen werden, unkompensiert ist;
Bestimmen einer Phasendifferenz zwischen den Radarsignalen, die durch mehrere Empfangskanäle des Radarsensors empfangen werden, basierend auf dem Hilfswert für den Azimutwinkel des Benutzers; und
Bestimmen des Azimutwinkels des Benutzers durch Anwenden einer Abbildungsfunktion auf die bestimmte Phasendifferenz, wobei die Abbildungsfunktion Phasendifferenzen mit Azimutwinkeln in Beziehung setzt, wodurch der Azimutwinkel für die Signalverzerrungen kompensiert wird.

14. Programm mit Programmcode zum Durchführen des Verfahrens nach Anspruch 13, wenn das Programm in einem Prozessor oder einer programmierbaren Hardware einer Toilette (120) nach Anspruch 10 ausgeführt wird.

## Revendications

1. Un appareil (100) de commande d'une ou de plusieurs fonctions d'un WC (120), l'appareil (100) comprenant un circuit (110) de traitement configuré pour :
recevoir une donnée (101) radar d'un capteur (130) radar intégré au WC (120) ;
déterminer des paramètres de déplacement d'un utilisateur par rapport au capteur (130) radar sur la base de la donnée (101) radar ;
déterminer, sur la base d'au moins une partie des paramètres de déplacement de l'utilisateur, si l'utilisateur est dans une zone définie à l'avance ;
en réaction à la détermination que l'utilisateur est dans la zone définie à l'avance, déterminer une trajectoire de déplacement de l'utilisateur sur la base des paramètres de déplacement de l'utilisateur ;
déterminer, sur la base de la trajectoire de déplacement, si l'utilisateur ralentit pendant qu'il se rapproche du WC (120) ;
déclencher la ou les fonctions du WC (120), en réaction à la détermination que l'utilisateur ralentit en se rapprochant du WC (120),
**caractérisé en ce que** les paramètres de déplacement de l'utilisateur comprennent un angle azimutal de l'utilisateur, et dans lequel, pour déterminer l'angle azimutal de l'utilisateur, le circuit (110) de traitement est configuré pour :
déterminer une valeur auxiliaire de l'angle azimutal, qui n'est pas compensée pour les distorsions des signaux radar reçus par une pluralité de canaux de réception du capteur radar ;
déterminer, sur la base de la valeur auxiliaire de l'angle azimutal de l'utilisateur, une différence de phase entre les signaux radar reçus par une pluralité de canaux de réception du capteur radar ; et
déterminer l'angle azimutal de l'utilisateur en appliquant une fonction de mise en correspondance à la différence de phase déterminée, dans lequel la fonction de mise en correspondance met en relation des différences de phase avec des angles azimutaux, l'angle azimutal étant ainsi compensé pour lesdites déformations des signaux.

2. L'appareil (100) de la revendication 1, dans lequel le circuit (110) de traitement est configuré pour empêcher un déclenchement de la ou des fonctions du WC (120) en réaction à la détermination que l'utilisateur ne ralentit pas en se rapprochant du WC (120).

3. L'appareil (100) de la revendication 1 ou de la revendication 2, dans lequel le circuit (110) de traitement est configuré pour déclencher la ou les fonctions du WC (120) en réaction à la détermination, sur la base de la trajectoire de déplacement, que l'utilisateur ne se rapproche pas du WC (120) et reste dans la zone définie à l'avance pendant au moins un laps de temps défini à l'avance.

4. L'appareil (100) de la revendication 3, dans lequel le circuit (110) de traitement est configuré pour empêcher le déclenchement de la ou des fonctions du WC (120) en réaction à la détermination, sur la base de la trajectoire de déplacement, que l'utilisateur ne se rapproche pas du WC (120) et reste dans la zone définie à l'avance pendant moins que le laps de temps défini à l'avance.

5. L'appareil (100) de l'une quelconque des revendications 1 à 4, dans lequel le circuit (110) de traitement est configuré pour empêcher le déclenchement de la ou des fonctions du WC (120) en réaction à la détermination, sur la base de la trajectoire de déplacement, que l'utilisateur s'éloigne du WC (120).

6. L'appareil (100) de l'une quelconque des revendications 1 à 5, dans lequel le circuit (110) de traitement est configuré pour :
déterminer, sur la base de la donnée (101) radar, une série temporelle respective de paramètres de déplacement de l'utilisateur ; et
déterminer la trajectoire de déplacement de l'utilisateur, sur la base de la série temporelle respective de paramètres de déplacement de l'utilisateur.

7. L'appareil (100) de l'une quelconque des revendications 1 à 6, dans lequel, pour déterminer la trajectoire de déplacement de l'utilisateur, le circuit (110) de traitement est configuré pour prédire la trajectoire de déplacement.

8. L'appareil (100) de l'une quelconque des revendications 1 à 7, dans lequel la zone définie à l'avance va d'une extrémité (121) avant du WC (120) jusqu'à une distance (d) définie à l'avance de l'extrémité avant du WC (120).

9. L'appareil (100) de l'une quelconque des revendications 1 à 8, dans lequel la ou les fonctions du WC (120) comprennent une ou plusieurs des fonctions suivantes : l'ouverture d'un couvercle (140) du WC (120), l'ouverture du siège (150) du WC (120), la chasse du WC (120), le chauffage du siège (150) du WC, la désodorisation de l'air dans et/ou autour du WC (120), l'humidification de la cuvette (170) du WC (120) et le moussage de l'eau dans le WC (120).

10. Un WC (120) comprenant :
un capteur (130) radar ; et
un appareil (100) suivant l'une des revendications 1 à 9 de commande d'une ou de plusieurs fonctions du WC (120).

11. Le WC (120) de la revendication 10, dans lequel la ou les fonctions du WC (120) comprennent au moins l'ouverture d'un couvercle (140) du WC (120), dans lequel le WC (120) comprend en outre un entraînement électromécanique pour ouvrir le couvercle (140) du WC, et dans lequel le circuit (110) de traitement est configuré pour déclencher la ou les fonctions du WC (120) en envoyant un signal de commande à l'entraînement électromécanique, ce qui fait que l'entraînement électromécanique ouvre le couvercle (140) du WC.

12. Le WC (120) de la revendication 10 ou de la revendication 11, dans lequel le capteur (130) radar est intégré dans un boîtier du WC (120).

13. Un procédé (400) de commande d'une ou de plusieurs fonctions d'un WC, le procédé (400) comprenant :
recevoir (402) une donnée radar d'un capteur radar intégré au WC ;
déterminer (404) des paramètres de déplacement d'un utilisateur par rapport au capteur radar sur la base de la donnée radar ;
déterminer (406), sur la base d'au moins une partie des paramètres de déplacement de l'utilisateur, si l'utilisateur est dans une zone définie à l'avance ;
en réaction à la détermination que l'utilisateur est dans la zone définie à l'avance, déterminer (408) une trajectoire de déplacement de l'utilisateur sur la base des paramètres de déplacement de l'utilisateur ;
déterminer (410), sur la base de la trajectoire de déplacement, si l'utilisateur ralentit en se rapprochant du WC ;
déclencher (412) la ou les fonctions du WC en réaction à la détermination que l'utilisateur ralentit en se rapprochant du WC ;
**caractérisé en ce que** les paramètres de déplacement de l'utilisateur comprennent un angle azimutal de l'utilisateur, et dans lequel déterminer l'angle azimutal de l'utilisateur comprend :
déterminer une valeur auxiliaire de l'angle azimutal, qui n'est pas compensée pour les distorsions des signaux radar reçus par une pluralité de canaux de réception du capteur radar ;
déterminer, sur la base de la valeur auxiliaire de l'angle azimutal de l'utilisateur, une différence de phase entre les signaux radar reçus par une pluralité de canaux de réception du capteur radar ; et
déterminer l'angle azimutal de l'utilisateur en appliquant une fonction de mise en correspondance à la différence de phase déterminée, dans lequel la fonction de mise en correspondance met en relation des différences de phase avec des angles azimutaux, l'angle azimutal étant ainsi compensé pour lesdites déformations des signaux.

14. Un programme ayant un code de programme pour effectuer le procédé suivant la revendication 13, lorsque le programme est exécuté sur un processeur ou un matériel programmable d'un WC (120) suivant la revendication 10.
